# FASCICULE DE BREVET EUROPEEN

(11) **EP 0 990 278 B1**
(45) Date de publication et mention de la délivrance du brevet: **01.06.2011**
(21) Numéro de dépôt: 99914623.6
(22) Date de dépôt: 20.04.1999
(51) Int. Cl.: H01Q 15/00, B60J 1/00, B32B 17/10, C03C 17/00

(54) **PLAQUE TRANSPARENTE, EN PARTICULIER UN VITRAGE POURVU D'UN REVETEMENT REFLECHISSANT LES RAYONNEMENTS ET D'UNE FENETRE PERMEABLE AUX RAYONNEMENTS A HAUTE FREQUENCE**
TRANSPARENTE PLATTE, INSBESONDERE GLASSCHEIBE, MIT EINER STRAHLUNGSREFLEKTIERENDEN BESCHICHTUNG UND EINEM FÜR HOCHFREQUENTE STRAHLUNG DURCHLÄSSIGEN FENSTER
TRANSPARENT PLATE, IN PARTICULAR PARTITION GLASS PROVIDED WITH A COATING REFLECTING RADIATION AND A WINDOW PERMEABLE TO HIGH FREQUENCY RADIATION

(30) Priorité: 21.04.1998 DE 19817712
(43) Date de publication de la demande: 05.04.2000
(73) Titulaire: SAINT-GOBAIN GLASS FRANCE, 92400 Courbevoie (FR)
(72) Inventeur: MAEUSER, Helmut, NL-6369 SJ Simpelveld (NL); IMMERSCHITT, Stefan, D-52134 Herzogenrath (DE)
(74) Mandataire: Le Cam, Stéphane Georges Elie
(86) Numéro de dépôt international: PCT/FR1999/000928
(87) Numéro de publication internationale: WO 1999/054961

(56) Documents cités:
- EP-A1- 0 531 734
- DE-A- 3 708 577
- DE-A- 4 433 051
- DE-A- 19 541 743
- DE-C- 19 503 892
- PARKER E A ET AL: "CONVOLUTED FREQUENCY-SELECTIVE ARRAY ELEMENTS DERIVED FROM LINEAR AND CROSSED DIPOLES" IEE PROCEEDINGS H. MICROWAVES, ANTENNAS & PROPAGATION, vol. 140, no. 5, PART H, 1 octobre 1993 (1993-10-01), pages 378-380, XP000413515 ISSN: 1350-2417

## Description

La présente invention concerne une plaque transparente, en particulier un vitrage pourvu d'un revêtement et d'une fenêtre de rayonnement, avec les particularités du préambule de la revendication 1.

Ces particularités sont connues de par le document DE 19 503 892 C1 dans lequel sont décrites des mesures pour réduire l'effet d'écran des vitres revêtues à l'égard des rayonnements micro-ondes porteurs d'informations. Les vitrages de ce type, revêtus de couches conductrices de l'électricité et transparents du point de vue optique, trouvent une application en tant que verres calorifuges, réfléchissant les rayons infrarouges, et/ou en tant que verres pouvant être chauffés électriquement et destinés à être utilisés comme vitrages, dans le bâtiment et dans les véhicules.

Dans le cas des véhicules, ces vitrages forment, avec une carrosserie métallique, une cage de Faraday, qui protège l'intérieur du véhicule contre les champs électromagnétiques. Dans un bâtiment, on peut également protéger électriquement des locaux en utilisant des vitres pourvues d'un revêtement conducteur de l'électricité et une configuration conductrice respective sur les autres parties de paroi. Des enceintes de protection de ce type peuvent protéger des équipements sensibles, tels des ordinateurs centraux contre des dérangements causés par des émetteurs de radiodiffusion puissants ou des appareils radar.

D'autre part, l'enceinte de protection ne laisse passer aucun rayonnement électromagnétique de type micro-onde, ce rayonnement étant utilisé comme onde porteuse pour des informations. Lorsqu'un émetteur et/ou un récepteur muni d'une antenne se trouve dans un habitacle protégé (véhicule), des problèmes de transmission surgissent. Par exemple, des systèmes d'indication de position des véhicules, de commande à distance, d'identification, et d'enregistrement des droits de péage, peuvent subir des dérangements.

De manière connue, on peut post-structurer les systèmes à couche en éliminant de manière linéaire la couche préalablement déposée en continu et ce, par voie mécanique ou thermique. En particulier, des fentes exceptionnellement étroites peuvent être ménagées dans la couche au moyen de rayons laser. Selon l'état de la technique précité, la couche conductrice de l'électricité est munie d'au moins une fente faisant office de fente rayonnante, ayant une longueur et une surface libre très petites, accordées sur la longueur d'onde du rayonnement micro-onde, par laquelle l'énergie du rayonnement absorbée par la couche conductrice doit être à nouveau expulsée dans le domaine des micro-ondes sous la forme d'énergie de rayonnement. Lorsque la fréquence effective pour la transmission d'informations s'élève par exemple à 5,8 GHz, comme cela est prévu pour l'enregistrement automatique des droits de péage sur les autoroutes, et que les fentes sont essentiellement prévues pour la transmission des micro-ondes de cette fréquence, elles sont avantageusement dimensionnées pour une longueur résonnante de λ/2 compte tenu de la constante diélectrique du verre. Pour la fréquence citée, qui correspond à une longueur d'onde λ = 52 mm, la longueur L des fentes est de 18 mm. Leur largeur ne joue pas un rôle primordial et est par exemple de 0,1 mm. L'écartement mutuel des fentes, aussi bien dans la direction horizontale que dans la direction verticale est indiqué en fonction de la résonance et est de 18 mm.

Au cas où l'information est transmise par le biais de micro-ondes à polarisation circulaire (c'est-à-dire que le plan d'oscillation instantanée des ondes tourne autour de son axe de propagation, de telle sorte que les ondes oscillent à l'intérieur d'une enveloppante de forme circulaire), des évidements cruciformes sont avantageusement prévus dans la couche. La longueur des deux fentes est à nouveau avantageusement accordée sur la longueur d'onde des micro-ondes utilisées et correspond à la valeur λ/2 des ondes utilisées compte tenu de la constante diélectrique du verre.

Des mesures comparatives relatives à l'affaiblissement d'un rayonnement micro-onde de fréquence de 5,8 GHz démontrent pour cet état de la technique qu'un vitrage en verre feuilleté présentant des fentes rayonnantes dans le revêtement permet d'atteindre un affaiblissement de la transmission nettement plus faible pour un rayonnement à fréquence élevée qu'un vitrage en verre feuilleté revêtu, et un affaiblissement approximativement égal à celui d'un vitrage en verre feuilleté non revêtu est possible.

Dans le cas de nombreuses applications, en particulier dans l'automobile, il est essentiel d'obtenir, uniquement à l'intérieur d'une zone de fenêtre limitée, relativement petite, une haute transmission de rayonnement ou un affaiblissement aussi faible que possible. A cette zone de fenêtre doit être associée l'antenne de l'unité de bord (émetteur et/ou récepteur) du système de transmission. La distance séparant l'antenne de la face interne du vitrage est prédéfinie par le système et est égale par exemple à la moitié de la longueur d'onde du rayonnement porteur d'informations intéressant, c'est-à-dire qu'elle est de l'ordre de quelques centimètres. Avec des fentes individuelles de la couche réparties uniformément sur la face d'un vitrage, selon l'état de la technique, il n'est cependant pas toujours possible d'atteindre la transmission locale puissante exigée pour les systèmes de ce type dans la zone de couverture directe de l'antenne de l'unité de bord.

Il est déjà connu des documents EP-A-O 531 734 et DE-A-195 41 743 un vitrage recouvert d'une couche transparente, dans laquelle un réseau quadrillé est réalisé à l'aide d'un laser. Avec ce réseau, qui s'étend sur la totalité du vitrage, il est prévu de diminuer l'effet d'écran du vitrage, pourvu d'une couche, à l'égard des rayonnements électromagnétiques. La distance séparant les lignes du réseau les unes des autres doit, selon ce document, être inférieure à 2,5 cm et ainsi inférieure à la moitié de la longueur d'onde des micro-ondes qui sont supposées traverser le vitrage. Ce document ne fait par contre aucune allusion au rapport entre la surface non revêtue et la surface revêtue.

Il est également connu de par le document DE 4 433 051 C2 comment élaborer une fenêtre pour le rayonnement en maintenant une partie de surface limitée et continue d'un vitrage exempte de la couche. Par exemple, on appose un masque sur le verre, ou sur la pellicule, lors de l'application du revêtement, ou on enlève à nouveau le matériau de couche après son application. Excepté un coût relativement élevé, des effets secondaires optiques peu souhaitables peuvent apparaître dans ces réalisations, tels qu'une coloration perçue de façon subjective par un observateur dans la zone non revêtue. Dans le but d'éviter ces effets, on peut encore rendre opaque la partie de surface concernée à l'aide d'une couche de couleur appliquée par exemple par sérigraphie. Dans le cas d'un vitrage en verre feuilleté, la couche de couleur doit se trouver sur le côté interne de la vitre externe, encore avant la couche fonctionnelle. Cet agencement de couche de couleur présente de gros désavantages pour la technologie de fabrication, et ce en particulier lors du bombage des vitrages. Les acheteurs de vitrages n'acceptent pas non plus toujours la diminution de la partie de surface transparente du vitrage à fenêtre qui s'ensuit.

L'invention a pour but de procurer un vitrage à fenêtre de rayonnement dans un revêtement qui, d'une manière optiquement peu visible et avec des possibilités d'applications universelles dans le cas de diverses configurations de systèmes, assure une bonne transmission des rayons à haute fréquence, au moins dans une zone de surface limitée, sans réduire la fonction d'affaiblissement ou de réflexion du revêtement dans les autres zones.

Ce but est atteint suivant l'invention avec les particularités caractérisantes des revendications indépendantes 1 et 2. Les particularités des revendications dépendantes informent sur des développements avantageux de cet objet.

Des essais sur des vitrages à couches fonctionnelles, en particulier sur des vitrages en verre feuilleté, dans lesquels une pellicule revêtue est incorporée, ont démontré que la transmission de micro-ondes à travers des revêtements structurés (que ce soit sur du verre ou sur une pellicule) est avant tout fonction de la surface perméable aux rayons, c'est-à-dire exempte du matériau de couche ou débarrassée de ce matériau. Prenant pour norme une unité de surface, la valeur de transmission optimale doit être déterminée par variation du rapport de la surface effectivement perméable aux rayons, ou surface non revêtue, d'une part, et d'une unité de surface globale, d'autre part.

L'unité de surface globale donnée est par exemple de 100 mm², dont 25 mm² en tout sont dépourvus de revêtement. Le rapport évoqué est donc d'un quart (25%). Dans des zones de couche continues, le quotient est donc égal à 0, dans les fenêtres connues exemptes de revêtement sur toute leur surface, il est de 1. Des tests ont confirmé, que ce n'est que pour ledit degré de suppression de revêtement de 25% que l'on atteint des propriétés de transmission utilisables de sorte que cette valeur doit être considérée comme une valeur minimale.

La répartition à plat requise des parties de surface non revêtues et revêtues d'une couche signifie que les éléments de surface dans la fenêtre en question alternent de manière périodique ou également de manière irrégulière compte tenu du caractère discret souhaité du point de vue optique. A ce sujet, la limite supérieure d'environ 80% du degré d'élimination de la couche a valeur de référence. Ceci est déterminant d'une part pour atteindre un affaiblissement de la transmission aussi faible que possible sur l'ensemble de la surface de fenêtre, et d'autre part la répartition uniforme des éléments de structure rend également possible la mise en oeuvre universelle de la seule et même fenêtre pour diverses configurations de système. La répartition permet dans une certaine mesure de réaliser une directivité de la fenêtre.

Le rapport entre la surface non revêtue et la surface globale de la fenêtre de rayonnement est particulièrement facile à calculer et à régler, lorsque la surface non revêtue est formée par le biais d'un motif de lignes droites. Sa dimension est donc donnée par le produit du nombre total de lignes multiplié par leur longueur et leur largeur, dans le cas de lignes qui se croisent, moins la surface des points d'intersection (qui sinon seraient comptés deux fois). La surface globale est définie par les écarts séparant les lignes extérieures respectives. Lors de la structuration du revêtement, on peut aussi bien faire varier la largeur des lignes que leur espacement dans de larges mesures, dans le but d'atteindre un comportement de transmission optimal. La largeur des lignes peut varier de préférence entre 0,05 et 0,5 mm, les écarts entre les lignes pouvant varier entre 0,2 et 1,5 mm.

Cependant, il est possible d'atteindre l'effet souhaité également avec d'autres motifs, répartis dans la fenêtre, par exemple avec une trame à points ou des emblèmes, comme par exemple les marques des véhicules équipés avec les vitrages. Mais ceci ne fait pas partie de l'invention.

D'autres paramètres nécessaires au dimensionnement de la fenêtre de rayonnement dans la couche sont la polarisation (linéaire ou circulaire) des rayons, leur amplitude et la longueur d'onde. De préférence, on adaptera autant que possible avec précision les évidements de la couche aux caractéristiques des rayons utilisés, et ce dans la mesure où cela n'affecte pas de façon notable l'utilisation universelle requise.

Dans le cas d'une polarisation circulaire, au vu des résultats des tests selon l'état de la technique, on évite une déformation elliptique de l'enveloppante représentant la réflexion de l'unité de bord faisant office de transpondeur en orientant les évidements dans deux directions perpendiculaires.

La hauteur de la fenêtre de communication doit en outre prendre en compte la position oblique du vitrage en position de montage. La largeur de la fenêtre de communication doit convenir à différents agencements des unités d'émission/réception mobiles ou fixes du dispositif de transmission situées à l'extérieur du véhicule.

Pour les systèmes d'encaissement automatique des taxes des péages routiers, on n'a pas encore établi de standard uniformisé. Actuellement, des variantes pour le montage des unités fixes au milieu de la voie de circulation ainsi que des versions pour véhicules à conduite à droite et à conduite à gauche font l'objet de discussions. On exige qu'à l'intérieur d'une ellipse de diffusion oblongue projetée sur la chaussée dans la zone de l'unité fixe, une transmission de données suffisamment correcte soit assurée à destination des unités de bord des véhicules. Les dimensions de l'ellipse sont définies en longueur par la vitesse de marche recherchée et encore autorisée et la hauteur de l'unité fixe au-dessus de la surface de la chaussée, et en largeur par les éventuels écarts latéraux à l'intérieur d'une voie de circulation par l'orientation latérale des unités fixes.

Une pose individuelle pour chaque type de vitrage apparaît dénuée de sens : le meilleur compromis a été trouvé en sélectionnant la largeur préférée de la fenêtre de communication de sorte que, même en cas d'une disposition latérale de l'unité fixe, un affaiblissement suffisamment faible allié à une bonne qualité de transmission soit obtenu.

On abordera ci-après brièvement les essais qui ont permis de tester les propriétés de transmission de divers modèles de fenêtres de rayonnement. Une forme particulièrement efficace comprend une structuration méandreuse de la couche dans la fenêtre de communication avec deux motifs constitués de lignes droites parallèles superposés, tournés de 90°. Dans le cas de la disposition d'une unité de transmission fixe en position médiane sur la chaussée et avec une fréquence de 5,8 GHz, on atteint ainsi un affaiblissement de seulement 3,5 dB et, dans le cas d'une disposition latérale avec un angle de ±30°, un affaiblissement de 4,5 dB. Il s'agit de valeurs qui ne diffèrent pas sensiblement de l'affaiblissement d'un vitrage non revêtu ou équipé d'une fenêtre de rayonnement sur l'ensemble de sa surface.

Une gamme de fréquences de 860 MHz à 7 GHz a fait l'objet de mesures. A l'intérieur de cette gamme de fréquences, l'affaiblissement de la transmission est accru de 1,8 dB au maximum dans le cas d'un rayonnement traversant perpendiculairement la fenêtre de rayonnement par rapport à un vitrage en verre feuilleté standard.

Des valeurs d'affaiblissement plus élevées peuvent être escomptées dans le cas d'un angle d'incidence déviant de l'axe perpendiculaire. Néanmoins, pour des angles jusqu'à = 30°, elles ne sont pas supérieures à 3,5 dB et elles ne dépassent 10dB que pour des angles supérieurs à ± 50°. Les essais ont été menés avec une polarisation autant horizontale que verticale des rayons sans que l'on remarque de différence notable. On a utilisé une construction d'essai simple comportant une unité émettrice/réceptrice fixe, l'échantillon de plaque correspondant avec la fenêtre de rayonnement et l'unité de bord fixée dans le système à la distance prédéterminée en arrière de cette fenêtre.

Les valeurs d'affaiblissement de vitrages en verre feuilleté normaux et d'échantillons de couches calorifuges à structure de cercles et de fentes cruciformes ont été déterminées à des fins de comparaison : ces valeurs étaient toutes nettement plus élevées que les valeurs précitées.

A titre d'exemple, sont indiquées sous la forme d'un tableau les valeurs comparatives de l'affaiblissement de la transmission en tant que fonction de l'angle d'incidence. Des mesures ont été effectuées sur des échantillons de verre feuilleté normal («référence»), et sur des échantillons portant le modèle suivant l'invention («méandres»), ainsi que des fentes en forme de cercles et des fentes cruciformes. Les chiffres désignent des valeurs d'affaiblissement en décibels en fonction de l'angle d'incidence, qui est modifié par échelons de dix degrés à partir de l'axe vertical, de -30° à + 30°.

Le rayonnement utilisé présentait une fréquence de 5,8 GHz et une longueur d'onde de 51,7 mm, et il était polarisé de manière linéaire et horizontale. On a mesuré les valeurs suivantes :

| Affaiblissement en dB à | - 30° | - 20° | - 10° | 0° | 10° | 20° | 30° |
|---|---|---|---|---|---|---|---|
| Référence | -2,6 | -1,8 | 0,8 | 0,8 | 1,2 | -0,2 | -1,8 |
| Méandres | -2,6 | -1,8 | 0,8 | 0 | 0,8 | -0,8 | -2 |
| Cercles | -7,5 | -5,5 | -2,5 | -2,5 | -2,5 | -4,5 | -6,25 |
| Croix | -10 | -8 | -6,5 | -6,5 | -7 | -8 | -9 |

Des rapports semblables avec des valeurs absolues légèrement différentes ont été mesurés dans le cas d'une polarisation verticale du rayonnement. Il est manifeste que les différences entre un modèle à enlèvement de couche préféré et une plaque transparente normale sont négligeables.

En la regardant avec attention, on voit que la fenêtre de communication n'est pas totalement invisible. Or, on peut dissiper le contraste, faire disparaître la transition entre la couche continue et la fenêtre en ménageant d'autres lacunes dans la couche. Celles-ci ne doivent avoir aucune incidence du point de vue de la transmission, et peuvent néanmoins améliorer la discrétion optique.

D'autres détails et avantages du but de l'invention découlent des dessins d'un exemple de réalisation et de la description suivante s'y rapportant.

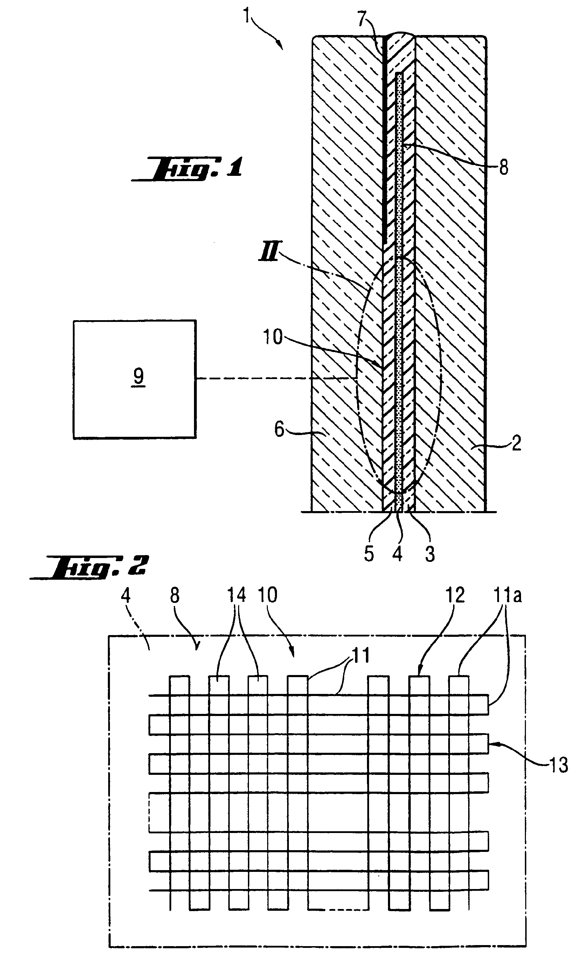

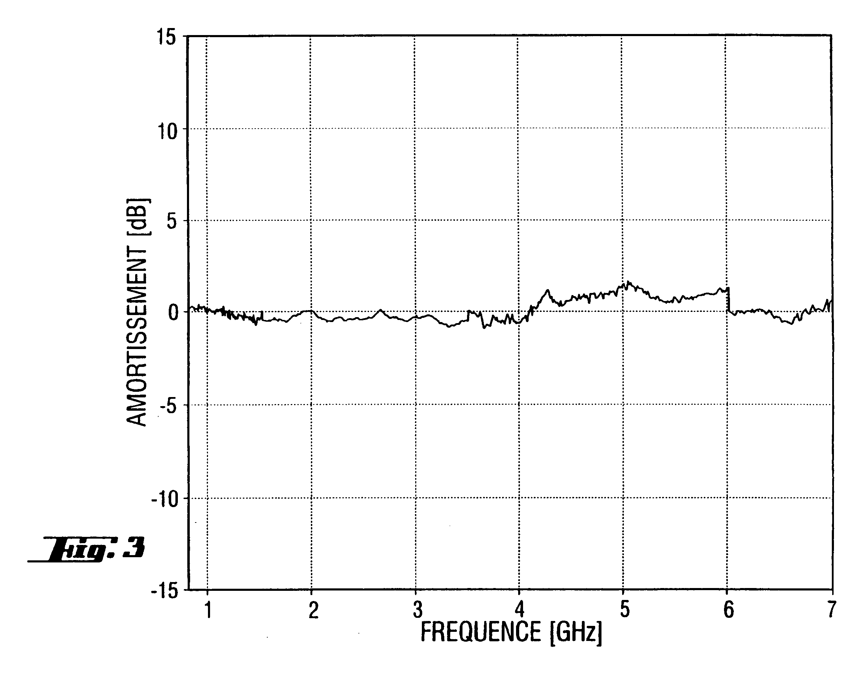

Dans les dessins :
□ la Fig. 1 est une vue partielle en coupe non à l'échelle d'une plaque transparente équipée suivant l'invention, sous la forme d'un pare-brise en verre feuilleté calorifuge pour véhicule;
□ la Fig. 2 est une vue de détail d'une fenêtre de communication de la plaque transparente, et
□ la Fig. 3 est un diagramme de la différence d'affaiblissement entre un vitrage en verre feuilleté non revêtu localement et une plaque munie de la fenêtre de communication explicitée ici, en relation avec la fréquence du rayonnement porteur d'informations.

La plaque transparente 1 représentée à la Fig. 1 est un pare-brise en verre feuilleté pour un véhicule. La plaque 1 est d'une façon connue constituée d'une vitre externe 2, d'une première couche adhésive thermoplastique 3 en butyral de polyvinyle (PVB) d'une épaisseur de 0,38 mm, d'une fine pellicule fonctionnelle 4 de revêtement d'une épaisseur d'environ 0,1 mm en téréphtalate de polyéthylène (PET), d'une autre couche adhésive 5 de 0,38 mm en PVB et enfin d'une vitre intérieure 6 tournée vers l'habitacle. Cette dernière supporte, d'une façon connue, sur sa surface tournée vers la couche adhésive une garniture en forme d'encadrement 7 en couleur à cuire opaque. Cette couche de couleur masque un cordon de colle non montré ici, qui permet de fixer le pare-brise dans le cadre de fenêtre de la carrosserie, pour empêcher l'action des rayons ultraviolets et barrer la vue.

Sur le côté de la pellicule fonctionnelle 4 en contact avec la couche adhésive 3 est appliqué un système à couche mince conductrice de l'électricité, transparente, 8, qui réfléchit les infrarouges et sert de couche calorifuge. Cette couche mince est déposée également d'une manière connue, de préférence par pulvérisation cathodique dans le champ magnétique (pulvérisation) sur la pellicule en PET, sachant que la couche fonctionnelle proprement dite est en argent. De multiples structures de couches appropriées sont connues.

Au niveau du bord externe du vitrage en verre feuilleté, les deux pellicules en PVB sont soudées l'une à l'autre par fusion de manière connue, sur tout leur pourtour afin d'étanchéifier le système de couche mince sensible à la corrosion contre les influences ambiantes.

Dans l'habitacle du véhicule est installée une antenne 9, représentée uniquement sous forme schématique, d'une unité de bord destinée à un système de transmission des données fonctionnant par rayonnement électromagnétique, par exemple un dispositif automatique pour enregistrer les taxes des péages routiers. Une zone restreinte (Détail II) du système à couche mince 8 est, à cet effet, réalisée sous la forme d'une fenêtre de communication ou de rayonnement 10. Dans ce cas, l'unité de bord peut être réalisée sous la forme d'un transpondeur passif, qui en réaction à un signal reçu renvoie une réponse propre à l'automobile à une unité fixe. On trouve également des systèmes, sur lesquels l'unité de bord est combinée à une carte à puce rechargeable, qui est débitée du montant de la taxe à la réception d'une impulsion de l'unité fixe.

Un agencement préféré pour la fenêtre de communication est montré plus en détail à la Fig. 2. Pour des raisons de représentation, les lignes sont en noir et la couche est en blanc; dans la réalité, les lignes sont naturellement plus claires que leur environnement. Dans la présente réalisation, la couche est éliminée suivant de fines lignes 11 d'un motif à carreaux, dont les intervalles entre les lignes restent intacts. On produit ce motif par exemple sous la forme de méandres, en pilotant de manière continue un rayon laser structurant, en partant d'une extrémité initiale et en suivant une première ligne droite 11, puis une courte partie transversale ou transition 11a, une deuxième ligne droite 11 parallèle à la première jusqu'à hauteur de l'extrémité initiale, puis à nouveau une transition 11a dans la même direction que la première transition, etc. et on produit ainsi un premier groupe 12 de lignes parallèles. La longueur des transitions 11a, adjointes aux extrémités de lignes en alternance correspond aux écarts entre les lignes parallèles respectives.

Après avoir élaboré le premier groupe 12 de lignes parallèles, on y superpose de manière similaire un deuxième groupe 13 de lignes parallèles entre elles, dont les lignes principales 11 s'étendent perpendiculairement aux lignes 11 du premier groupe. Un obtient ainsi le motif à carreaux représenté comportant des parties de surface revêtues et incluses 14. Il n'est pas nécessaire que les trajets des lignes des groupes forment entre elles des boucles fermées, on peut en effet, comme représenté, laisser les points d'extrémité des lignes non reliés.

Comme déjà évoqué dans le préambule, une telle configuration de motif est recommandée avant tout dans le cas d'utilisations d'ondes à polarisation circulaire. Dans le cas d'ondes à polarisation linéaire, il est possible, le cas échéant, de rendre la fenêtre de rayonnement suffisamment transparente à l'aide d'un seul groupe de lignes (verticales ou horizontales). Cependant, il n'est pas absolument nécessaire d'orienter les lignes de la plaque transparente exactement à la verticale ou à l'horizontale, mais on pourrait prévoir des orientations diagonales.

Des essais ont montré que des déformations de champ peuvent se produire dans la zone périphérique si l'on omet les liaisons réciproques entre les lignes. Ainsi, des points sans communication peuvent apparaître dans la zone de l'ellipse de diffusion évoquée plus haut (zone de communication entre les unités fixes et les unités de bord).

Dans la fabrication du verre feuilleté, on utilise la plupart du temps un prélaminé fait de la pellicule en PET et de la pellicule adhésive (butyral de polyvinyle/PVB), reliée à sa face revêtue dans le but de prévenir les dommages affectant la couche. On peut également élaborer la structuration souhaitée des couches fonctionnelles dans ce prélaminé au cas où une légère diffusion du rayon laser serait provoquée au travers de la surface rugueuse de la pellicule de PVB, et où il faudrait dès lors tolérer un élargissement des lignes par rapport au rayon projeté.

Dans le cas de la présente application, on est arrivé à la conclusion, que la fenêtre de rayonnement 10 fournit les meilleures valeurs de transmission, lorsque le rapport entre la surface non revêtue et sa surface totale est réglé sur des valeurs comprises entre 25% et 80%. La largeur de l'ensemble de la fenêtre dépend au final des propriétés externes du système (telles que l'agencement des unités de transmission fixes par rapport à la chaussée et la directivité). Dans tous les cas, elle doit être supérieure à la hauteur, laquelle peut être déterminée essentiellement à partir de la longueur d'onde et de l'amplitude des rayons utilisés ainsi que la position inclinée du vitrage en position de montage par le biais d'essais simples. On a obtenu de très bons résultats pour tous les types de mise en oeuvre envisageables avec une largeur de 200 mm et une longueur de 100 mm.

La largeur des lignes est en l'occurrence de préférence dans un domaine compris entre 0,1 et 0,4 mm.

La Fig. 3 montre enfin l'allure de la différence d'affaiblissement entre un échantillon muni d'une fenêtre entièrement sans couche de dimensions 120 x 100 mm² et un échantillon muni d'une fenêtre de rayonnement structurée comme celle explicitée plus haut. Avec des dimensions extérieures similaires de 120 x 100 mm², la couche fonctionnelle dans la fenêtre-échantillon a été structurée uniformément en de larges lignes de 0,3 mm séparées par des écarts de 1,5 mm, le rapport entre la surface non revêtue et la surface totale de la fenêtre étant presque de 31%.

L'affaiblissement en décibels est indiqué en relation avec la fréquence donnée en gigahertz. Le maximum de la différence se situe à environ 5 GHz et est en ce point d'environ 1,8 dB.

## Revendications

1. Plaque transparente (1), en particulier vitrage, recouverte d'un revêtement (8) comportant une couche mince conductrice de l'électricité, transparente, le revêtement réfléchissant les rayonnements infrarouges et comportant au moins une fenêtre (10) perméable aux rayonnements à haute fréquence présentant une surface non revêtue, la fenêtre (10) étant formée dans une zone de surface limitée d'un seul tenant de la plaque (1), ***caractérisée en ce que*** la fenêtre (10) est formée d'un motif d'un seul groupe de lignes droites non revêtues (11) parallèles reliées entre elles par paires, en méandres, à leurs extrémités alternantes par des transitions (11a) de telle sorte que chaque extrémité des lignes droites parallèles soit reliée au plus à l'extrémité d'une seule autre ligne droite parallèle voisine ***et en ce que*** dans la fenêtre (10), dans le cas de la répartition à plat de la surface non revêtue et de la surface revêtue, un rapport entre la surface non revêtue des lignes en méandres et la surface totale de la fenêtre (10) est compris entre 25% et 80%.

2. Plaque transparente (1), en particulier vitrage, recouverte d'un revêtement (8) comportant une couche mince conductrice de l'électricité, transparente, le revêtement réfléchissant les rayonnements infrarouges et comportant au moins une fenêtre (10) perméable aux rayonnements à haute fréquence présentant une surface non revêtue, la fenêtre (10) étant formée dans une zone de surface limitée d'un seul tenant de la plaque (1), ***caractérisée en ce que*** la fenêtre (10) est formée d'un motif de lignes droites non revêtues,
le motif étant constitué de deux groupes (12, 13), orientés perpendiculairement l'un à l'autre de lignes parallèles entre elles (11, 11a),
un premier groupe de lignes droites parallèles reliées entre elles par paires, en méandres, à leurs extrémités alternantes par des transitions (11a), de telle sorte que chaque extrémité des lignes droites parallèles soit reliée au plus à l'extrémité d'une seule autre ligne droite parallèle voisine, et
un second groupe de lignes droites parallèles reliées entre elles par paires, en méandres, à leurs extrémités alternantes par des transitions (11a) de telle sorte que chaque extrémité des lignes droites parallèles soit reliée au plus à l'extrémité d'une seule autre ligne droite parallèle voisine
*et **en ce que*** dans la fenêtre (10), dans le cas de la répartition à plat de la surface non revêtue et de la surface revêtue, un rapport entre la surface non revêtue des lignes en méandres et la surface totale de la fenêtre (10) est compris entre 25% et 80%.

3. Plaque transparente suivant la revendication 1 ou 2, ***caractérisée en ce que*** les écarts réciproques des lignes déterminés par les transitions (11a) sont compris entre 0,2 et 1,5 mm.

4. Plaque transparente suivant l'une quelconque des revendications 1 à 3, ***caractérisé en ce que*** la largeur des lignes (11, 11a) est comprise entre 0,05 et 0,5 mm.

5. Plaque transparente suivant l'une quelconque des revendications précédentes, ***caractérisée en ce que*** la zone est produite par une structuration locale, en particulier au moyen d'un laser, d'une couche continue après son application.

6. Plaque transparente suivant l'une quelconque des revendications précédentes, ***caractérisée en ce que*** sur la fenêtre (10) présente une extension horizontale en largeur de 200 mm et une extension verticale en hauteur de 100 mm.

7. Plaque transparente suivant l'une quelconque des revendications précédentes, ***caractérisée en ce que*** sur le bord de la fenêtre d'autres éléments structurels sont prévus pour masquer d'un point de vue optique la transition entre la zone de la couche et la fenêtre.

## Claims

1. Transparent sheet (1), particularly glazing, covered with a coating (8) comprising a thin transparent electrical conductive layer, the coating reflecting the infrared radiation and comprising at least one window (10) being permeable to high-frequency radiation and having an uncoated area, the window (10) being formed in a region of limited area made as one piece with the sheet (1), ***characterized in* that** the window (10) is formed of a pattern of only one group of uncoated straight lines (11) that are parallel and connected together in pairs, in meander, at their alternating ends by transitions (11a) such that each extremity of the parallel straight lines is connected at most to the extremity of only one other neighbouring parallel straight line *and **in that*** in the window (10), when the flat distribution of the uncoated area and of the coated area is considered, the ratio of the uncoated area of meandering lines to the total area of the window (10) is between 25% and 80%.

2. Transparent sheet (1), particularly glazing, covered with a coating (8) comprising a thin transparent electrical conductive layer, the coating reflecting the infrared radiation and comprising at least one window (10) being permeable to high-frequency radiation and having an uncoated area, the window (10) being formed in a region of limited area made as one piece with the sheet (1), ***characterized in* that** the window (10) is formed of a pattern of uncoated straight lines, the pattern consisting of two mutually perpendicular groups (12, 13) of lines (11, 11a) which are parallel to each other,
a first group of straight lines (11) that are parallel and connected together in pairs, in meander, at their alternating ends by transitions (11a) such that each extremity of the parallel straight lines is connected at most to the extremity of only one other neighbouring parallel straight line, and
a second group of straight lines (11) that are parallel and connected together in pairs, in meander, at their alternating ends by transitions (11a) such that each extremity of the parallel straight lines is connected at most to the extremity of only one other neighbouring parallel straight line
*and **in that*** in the window (10), when the flat distribution of the uncoated area and of the coated area is considered, the ratio of the uncoated area of meandering lines to the total area of the window (10) is between 25% and 80%.

3. Transparent sheet according to Claim 1 or 2, ***characterized in that*** the mutual separations of the lines defined by the transitions (11a) are between 0.2 and 1.5 mm.

4. Transparent sheet according to any one of Claims 1 to 3, ***characterized in that*** the width of the lines (11, 11a) is between 0.05 and 0.5 mm.

5. Transparent sheet according to any one of the preceding claims, ***characterized in that*** the region is produced by locally structurizing, particularly by means of a laser, a continuous layer after it has been applied.

6. Transparent sheet according to any one of the preceding claims, ***characterized in that*** the window (10) has a horizontal extent in width of 200 mm and a vertical extent in height of 100 mm.

7. Transparent sheet according to any one of the preceding claims, ***characterized in that*** other structural elements are provided along the edge of the window in order for the transition between the layer region and the window to be optically masked.

## Patentansprüche

1. Durchsichtige Platte (1), insbesondere Verglasung, mit einer Verkleidung bedeckt (8) umfassend eine durchsichtige, dünne elektrizitätsleitfähige Schicht, wobei die Verkleidung die Infrarotstrahlungen reflektiert und wenigstens ein gegenüber Hochfrequenzstrahlungen durchlässiges Fenster (10) mit einer nichtbekleideten Oberfläche umfasst, wobei das Fenster (10) in einem einstückig begrenzten Oberflächenbereich der Platte (1) gebildet ist, ***dadurch gekennzeichnet, dass*** das Fenster (10) aus einem Muster mit einer einzigen Gruppe von parallelen nichtbekleideten, paarweise an seinen abwechselnden Enden durch Übergänge (11a) verbundenen mäanderförmigen Geradlinien (11) derart besteht, dass jedes Ende der parallelen Geradlinien höchstens mit dem Ende einer anderen benachbarten parallelen Geradlinie verbunden ist und dass im Fenster (10), bei flacher Verteilung der nichtbekleideten Oberfläche und der bekleideten Oberfläche, ein Verhältnis zwischen der nichtbekleideten Oberfläche der mäanderförmigen Linien und der Gesamtoberfläche des Fensters (10) zwischen 25% und 80% beträgt.

2. Durchsichtige Platte (1), insbesondere Verglasung, mit einer Verkleidung bedeckt (8) umfassend eine durchsichtige, dünne elektrizitätsleitfähige Schicht, wobei die Verkleidung die Infrarotstrahlungen reflektiert und wenigstens ein gegenüber Hochfrequenzstrahlungen durchlässiges Fenster (10) mit einer nichtbekleideten Oberfläche umfasst, wobei das Fenster (10) in einem einstückig begrenzten Oberflächenbereich der Platte (1) gebildet ist, ***dadurch gekennzeichnet, dass*** das Fenster aus einem Muster von nichtbekleideten Linien ausgebildet ist, wobei das Muster aus zwei zueinander senkrechten ausgerichteten Gruppen (12, 13) mit zueinander parallelen Linien (11, 11a) besteht, d.h. aus einer ersten Gruppe von mäanderförmigen an seinen abwechselnden Enden durch Übergänge (11a), parallelen paarweise verbundenen Geradlinien, so dass jedes Ende der parallelen Geradlinien höchstens mit dem Ende einer anderen benachbarten parallelen Geradlinie verbunden ist, und aus einer zweiten Gruppe von mäanderförmigen an seinen abwechselnden Enden durch Übergänge (11a), parallelen paarweise verbundenen Geradlinien, so dass jedes Ende der parallelen Geradlinien höchstens mit dem Ende einer anderen benachbarten parallelen Geradlinie verbunden ist
*und dass* im Fenster (10), bei flacher Verteilung der nichtbekleideten Oberfläche und der bekleideten Oberfläche, ein Verhältnis zwischen der nichtbekleideten Oberfläche der mäanderförmigen Linien und der Gesamtoberfläche des Fensters (10) zwischen 25% und 80% beträgt.

3. Durchsichtige Platte nach Anspruch 1 oder 2, ***dadurch gekennzeichnet, dass*** die gegenseitigen Abstände der durch die Übergänge (11a) festgestellten Linien zwischen 0,2 und 1,5 mm betragen.

4. Durchsichtige Platte nach einem der Ansprüche 1 bis 3, ***dadurch gekennzeichnet, dass*** die Breite der Linien (11, 11a) zwischen 0,05 und 0,5 mm beträgt.

5. Durchsichtige Platte nach einem der vorangegangenen Ansprüche, ***dadurch gekennzeichnet, dass*** der Bereich durch eine lokale Strukturierung, insbesondere durch Laserverfahren, einer durchgehenden Schicht nach deren Beschichtung hergestellt ist.

6. Durchsichtige Platte nach einem der vorangegangenen Ansprüche, ***dadurch gekennzeichnet, dass*** das Fenster (10) eine 200 mm breite horizontale Erstreckung und eine 100 mm hohe vertikale Erstreckung aufweist.

7. Durchsichtige Platte nach einem der vorangegangenen Ansprüche, ***dadurch gekennzeichnet, dass*** auf der Kante des Fensters weitere Strukturelemente vorgesehen sind, um den Übergang zwischen dem Schichtbereich und dem Fenster optisch zu verdecken.
